# EUROPEAN PATENT APPLICATION

(11) **EP 4 851 524 A1**
(43) Date of publication of application: **09.12.2026**
(21) Application number: 25747681.2
(22) Date of filing: 22.01.2025
(51) Int. Cl.: F17C 1/12, F17C 3/02, B67D 7/34

(54) **CRYOGENIC FULL CONTAINMENT TANK**

(30) Priority: 29.01.2024 CN 202410125561
(71) Applicant: CIMC Enric Engineering Technology Co., Ltd., Dachang Sub-district Jiangbei New Area Nanjing Jiangsu 210048 (CN); China International Marine Containers (Group) Co., Ltd., Shenzhen, Guangdong 518000 (CN); CIMC Enric Investment Holdings (Shenzhen) Co., Ltd., Shenzhen, Guangdong 518000 (CN)
(72) Inventor: YING, Jiecheng, Nanjing, Jiangsu 210048 (CN); ZHU, Shenghua, Nanjing, Jiangsu 210048 (CN); YE, Lin, Nanjing, Jiangsu 210048 (CN); LI, Jue, Nanjing, Jiangsu 210048 (CN); LIN, Jian, Nanjing, Jiangsu 210048 (CN)
(74) Representative: Gleiss Große Schrell und Partner mbB
(86) International application number: PCT/CN2025/073912
(87) International publication number: WO 2025/162110

(57) **Abstract**

A cryogenic full containment tank, comprising an outer tank (11), an inner tank (12), a suspended deck (16), a heat preservation and insulation system, and a discharging pump column (15), and being further provided with a safety extraction system (14). The safety extraction system (14) comprises an extraction device (141), a filtration device (142), a liquid level detector (146) and a controller (147). The extraction device (141) passes through the top of the outer tank (11) and extends into a hot corner region (132) at the bottom through an interlayer space (13) between the inner tank (12) and a tank wall of the outer tank (11). Once leakage occurs at the inner tank (12), liquid collected at the hot corner region (132) can be extracted, and the extraction flow rate of the liquid is greater than the leakage flow rate required by leakage protection standards. The filtration device (142) is arranged on a top platform of the outer tank (11), is connected between the extraction device (141) and the inner tank (12), and can filter extracted liquid and then send the filtered liquid back to the inner tank (12) or output the filtered liquid outwards. In the cryogenic full containment tank, when leakage occurs at the inner tank (12), the safety extraction system (14) can control the liquid level of the liquid leaked into the hot corner region (132) at the bottom of the interlayer space (13) from the inner tank (12) to an extremely low level that does not affect the safety of a storage tank for a long time, the extracted liquid is subjected to impurity removal by means of the filtration device (142), and then sent back to the inner tank (12) and outputted outwards.

## Description

### CROSS-REFERENCE TO RELATED APPLICATIONS

The present application claims priority of Chinese Patent Application No. 202410125561.8, filed on January 29, 2024, which is incorporated herein by reference in its entirety.

### TECHNICAL FIELD

The present application relates to the technical field of low-temperature liquefied gas storage, in particular to a cryogenic full containment tank.

### BACKGROUND

A cryogenic full containment storage tank is main equipment for storing liquefied gases such as liquefied natural gas (methane), ethylene, ethane, propylene, propane, butylene, liquid ammonia and the like, is widely applied in the fields of petroleum industry, energy and chemical industry, and is important equipment for ensuring national production and energy supply. Most of the materials stored by the cryogenic full containment tank belong to flammable, explosive or toxic and harmful substances, and the capacity of the cryogenic full containment tank is tens of thousands to over two hundred thousand cubic meters currently, they are enormous in scale, and the consequences would be very serious once leakage accidents happen.

Currently, the technical standard for designing and building a cryogenic storage tank requires that the outer tank can bear low-temperature liquid leaked from the inner tank and can seal the evaporated gas to realize orderly and controllable discharge when leakage occurs in the inner tank. However, the design requirements of the existing specifications for the cryogenic storage tank are not strict, when leakage occurs in the inner tank and materials cannot be transferred in time, and thusly the liquid level of the inner tank is reduced below the height of a hot corner protection structure (hot corner region), the liquid level of an annular space between the inner tank and the outer tank may exceed the hot corner protection height, and at this time, the safe operation or the safe shutdown of the cryogenic tank is difficult to ensure.

### SUMMARY

An embodiment of the present application provides a cryogenic full containment tank which includes an outer tank, an inner tank which is arranged inside of the outer tank and a suspended deck (suspended ceiling), a discharging pump column for outputting liquid in the inner tank outwards, a heat preservation and insulation system for preserving and insulating heat of the cryogenic full containment tank, and a safety extraction system; an interlayer space is enclosed between the inner peripheral side wall of the outer tank and the outer peripheral side wall of the inner tank;
the safe extraction system includes:
an extraction device which is communicated with a hot corner region at the bottom of the interlayer space, extends upwards from the bottom of the interlayer space and passes through the top of the outer tank, and the extraction device is used to extract liquid leaked from the inner tank into the hot corner region; and the extraction flow rate of the extraction device is greater than the maximum flow rate corresponding to the leakage condition required by leakage protection standards; and
a filtration device which is arranged at the top of the outer tank; the filtration device is communicated between the extraction device and the inner tank, and is used to filter the liquid extracted by the extraction device and delivers the filtered liquid back to the inside of the inner tank or output it outwards.

Compared with the prior art, the full containment tank provided by the present application is such that, when leakage occurs in the inner tank, the extraction device of the safety extraction system may extract the liquid leaked into the hot corner region at the bottom of the interlayer space from the inner tank, and the extraction flow rate of the extraction device is greater than the maximum flow rate corresponding to the leakage condition required by leakage protection standards so as to control the liquid level in the hot corner region of the interlayer space; also, the extracted liquid is filtered by the filtration device and then is delivered back to the inside of the inner tank or delivered outwards so as to ensure that the liquid delivered back to the inner tank or the liquid delivered outwards has no impurities. As such, the cryogenic full containment tank with the leaked inner tank can be maintained to run for a long time without other empty tanks for material dumping, thereby winning time for transferring materials and safe shutdown. In other words, the present application enables the cryogenic full containment tank to maintain a controllable, safe operation for a long time after leakage occurs in the inner tank without the need for emergency response, simply by activating the safety extraction system until the materials have been removed.

### BRIEF DESCRIPTION OF THE DRAWINGS

Fig. 1 is a schematic structural diagram of a cryogenic full containment tank in this embodiment.
Fig. 2 is a schematic structural diagram of a cryogenic full containment tank in some embodiments.
Fig. 3 is a schematic structural diagram of a modified embodiment of the cryogenic full containment tank shown in Fig. 2.
Fig. 4 is a schematic structural diagram of a cryogenic full containment tank in some other embodiments.
Fig. 5 is a schematic structural diagram of a modified embodiment of the cryogenic full tank shown in Fig. 4.

### DETAILED DESCRIPTION

The present application provides a cryogenic full containment tank. In order to make the purpose, technical solution and effect of the present application clearer and more explicit, the present application is described in further detail hereinafter with reference to the accompanying drawings and by way of embodiments. It should be understood that the specific embodiments described herein are only for the purpose of explaining the present application, and are not intended to limit the present application.

Currently, the widely used full containment tank is the type of cryogenic storage tank with the highest safety performance level, and appeared in the 1980s. In the case of a cryogenic full tank, whether it's a bimetallic tank type or a concrete tank type, the height of the hot corner protection facility (hot corner region) is typically only 5 m, and if leakage occurs in the inner tank and the liquid level of the material in the tank is not readily available for discharge, the liquid level in the annular space between the inner and outer tanks will exceed the height of the hot corner protection facility, causing a significant rate of evaporation (especially in a metallic outer tank) and damage to the outer tank (especially in a concrete outer tank).

For a metallic outer tank of bimetallic tank type, while the material of a tank wall can withstand low temperatures, the low-temperature liquid leaked to the annular space directly contacts the metallic outer tank. The low-temperature liquid is inevitably subjected to rapid flash vaporization due to the strong thermal conductivity of metal. Meanwhile, the cold preservation effect of pearlite sand filler is invalid due to the infiltration of the low-temperature liquid, so that the evaporation rate of the low-temperature liquid in the inner tank is also significantly increased. The overpressure relief facility does not take the condition that the rapidly evaporated gases would carry a large amount of pearlite sand into account, there are serious doubts about whether the overpressure discharge pipeline can operate safely and effectively in an accident state. If the overpressure discharge pipeline is blocked by the pearlite sand, the pressure in the tank rises rapidly, causing the breakage of weak part and leakage of medium gas, and further causing explosion and fire hazard. In addition, the rapid vaporization of the low-temperature liquid in the annular space will lead to a local pressure rise in the annular space under the flow resistance caused by heat insulation material, which may cause a destabilization of the external pressure to the tank wall in the upper part of the inner tank where no liquid is present.

For a pre-stressed concrete outer tank of concrete tank type, the gas sealing of the inner side of the tank wall thereof is realized by adopting a common low-alloy steel lining plate. In the case of normal operation, because the pearlite sand plays a main role in heat insulation and cold preservation, the temperature of the inner wall of the outer tank is not too low and is far higher than that of the inner tank. However, after the low-temperature liquid leaks into the annular space, the pearlite sand is infiltrated with the low-temperature liquid and will lose its heat insulation and cold preservation effect, and a significant portion of the pearlite sand which is not directly immersed in the low-temperature liquid will also become infiltrated due to capillary effect, causing its heat insulation and cold preservation to be significantly reduced. Therefore, in the case that the inner tank leaks and the liquid level of the annular space exceeds the protection height of the hot corner, the lining plate on the inner wall of the concrete outer tank is rapidly shrunk and becomes brittle under the immersion of low-temperature liquid. A plurality of cracks may be formed in the weld with high probability. The existing gas-tight and liquid-tight performance will be invalid. The low-temperature liquid permeating into the gap between the wall of the concrete tank and the lining plate is rapidly gasified. This will further tear the weld of the lining plate and may even lead to the detachment of the lining plate. The wall of the concrete tank will directly contact with the low-temperature liquid. Frost cracks and the resulting leakage out of the tank are also difficult to avoid, and the risk of fire and explosion is greatly increased. For the cryogenic storage tank of concrete tank type, there is also a risk of local pressure increases caused by the rapid vaporization of liquid in the annular space, as well as the risk of instability in the upper tank wall of the inner tank due to external pressure.

Therefore, once leakage occurs in the inner tank of the cryogenic full containment tank and the liquid level in the annular space is higher than the height of the hot corner protection facility, the safety operation is difficult in both the bimetallic tank type and the concrete tank type.

The European Union's Standard for cryogenic storage tanks EN14620-1, article 7.2.2.1 provides a requirement for considering the leakage amount of Φ20 equivalent aperture at the bottom of the tank wall. According to this rule, the maximum possible leakage rate set by the standard can be measured, and for a storage tank with the specification of 20000-40000 m³, the highest liquid level of the inner tank is generally within the range of 25-30 m; the maximum liquid level of the storage tank with the specification of more than 50000 m³ is generally within the range of 30-35 m. The leakage rate of Φ20 aperture, measured at a liquid level of 30 m, will reach about 27 m³/h. An annular gap between the inner and outer tanks is generally about 1,000 mm. The height of the hot corner protection facility is generally 5 m, and the thermal insulation layer between it and the inner wall of the outer tank will occupy a thickness of 200 to 300 mm. Therefore, the width of the annular gap between the hot corner protection facility and the tank wall of the inner tank is about 700 mm. Measured at inner tank diameters of 48 m, 57 m, 70 m, and 80 m (corresponding to specifications of 50,000, 80,000, 120,000 and 160,000 m³ respectively), and an annular gap width of 700 mm, the annular gap volume of the hot corner protection facility is about 535, 634, 777 and 887 m³ respectively, and if the leakage flow rate is 27m³/h, the time for filling the 5 m-high hot corner protection annular gap is about 19.8, 23.5, 28.8 and 32.9 hours respectively (about 28-45 hours if measured at 15 m of the half tank liquid level). Thus it can be seen that, if the maximum leakage condition set by the Standard EN14620 occurs, the annular gap for hot corner protection can be filled with the leakage amount of 30 m liquid level of the inner tank for about one day (for the liquid level state of 15 m, it is not more than two days). If there are no other storage tanks nearby which have enough space to store the same material and may be emptied in time, or the liquid level in the tank is high when an accident occurs, it will take more than two days even if there is a place to transfer the material, it will be inevitable that the liquid level of the leaked material exceeds the hot corner protection height, and the storage tank will face a very dangerous state.

Thus it can be seen that, once large-scale leakage occurs the inner tank of the existing cryogenic full containment tank, the safety rescue and troubleshooting time provided by the hot corner protection facility for operators is very limited. As storage tank capacity continues to expand, the time required to empty the storage tank is longer and longer. As large cryogenic storage tanks used as receiving stations or as storage facilities in the raw material tank area of major petrochemical enterprises, the flow required for loading a tank loading vehicle or a small inland river ship and the feeding of a production device are relatively low. Consequently, the output capacity of the discharging pump columns configured by the storage tank is virtually insignificant when compared to the requirement for emergency tank emptying. Since there is no way to prevent the rapid rise of the liquid level in the hot corner protection annular gap, there is indeed a risk that the storage tank cannot be safely shut down.

Therefore, the present application provides a full containment tank with higher safety performance to solve the above problems and reduce potential safety hazards.

Hereinafter, specific embodiments of the cryogenic full containment tank according to the present application will be described in detail with reference to the accompanying drawings.

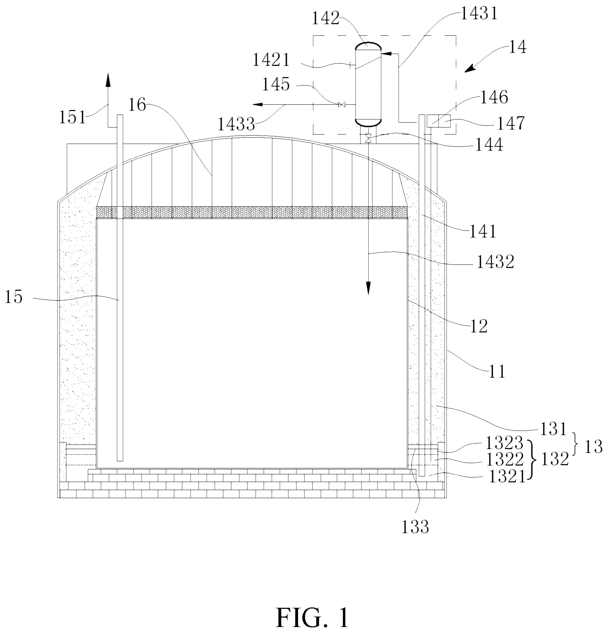

Fig. 1 is a schematic structural diagram of a cryogenic full containment tank in this embodiment.

Referring to Fig. 1, the cryogenic full containment tank includes an outer tank 11, an inner tank 12, a discharging pump column 15, a suspended deck (ceiling) 16, a heat preservation and insulation system and a safety extraction system 14. The safety extraction system 14 includes an extraction device 141 and a filtration device 142. The extraction device 141 is communicated with the bottom of the interlayer space 13, extends upwards from the bottom of the interlayer space 13 and passes through the top of the outer tank 11. The filtration device 142 is arranged at the top of the outer tank 11, and the filtration device 142 is communicated between the extraction device and the inner tank 12.

In the present application, by arranging the safety extraction system 14, when leakage occurs in the inner tank 12, the extraction device 141 can extract the liquid leaked from the inner tank 12 into the bottom of the interlayer space 13, and the extraction flow rate is greater than the maximum flow rate corresponding to the leakage condition required by the leakage protection design standards so as to control the liquid level in the interlayer space 13, so that the liquid level in the interlayer space 13 is always below the safety warning liquid level 133 of the hot corner region 132; also, the extracted liquid is filtered by the filtration device 142 and then is delivered back to the inside of the inner tank 12 or delivered outwards so as to ensure that the liquid delivered back to the inner tank or the liquid delivered outwards has no impurities. As such, the cryogenic full containment tank with the leaked inner tank 12 can be maintained to run for a long time without other empty tanks for material dumping, thereby winning time for transferring materials and safe shutdown. In other words, the present application enables the cryogenic full containment tank to maintain a controllable, safe operation for a long time after leakage occurs in the inner tank 12 without the need for emergency response, simply by activating the safety extraction system 14 until the materials have been removed.

The outer tank 11 is hollow inside. The inner tank 12 is arranged inside of the outer tank 11 with spacing between an outer peripheral side wall of the inner tank 12 and an inner peripheral side wall of the outer tank 11. The inner tank 12 is used to contain liquefied gases such as liquefied natural gas (methane), ethylene, ethane, propylene, propane, butylene, liquid ammonia and the like.

An interlayer space 13 is enclosed between the inner peripheral side wall of the outer tank 11 and the outer peripheral side wall of the inner tank 12. The interlayer space 13 is divided into a heat-insulated region 131 and a hot corner region 132 along a vertical direction. The heat-insulated layer is provided in the heat-insulated region 131, for carry out the cold preservation to inner tank 12, in order to prevent that the low-temperature liquid inside of the inner tank 12 from evaporating. The hot corner region 132 is divided into a lower part, a middle part and an upper part from bottom to top, the lower part is a liquid collection region 1321, the middle part is a liquid level fluctuation safety region 1322 for extracting operation, and the upper part is an isolation region 1323 which is separated from the heat-insulated region 131. The safety warning liquid level 133 is provided at the upper part, and the safety warning liquid level 133 has spacing from the boundary between the middle part and the upper part. It should be noted that the upper part is the position where the liquid level of the safety extraction system 14 should not reach under normal operating conditions, and if the liquid level reaches the safety warning level 133, indicating that the extraction rate is less than the leakage rate, the extraction amount needs to be increased. The hot corner region 132 is provided with a heat-insulated layer which is closely attached to the inner wall of the outer tank 11.

When leakage occurs in the inner tank 12, the lower part is a leaked liquid collection region 1321, and the middle part is a liquid level fluctuation safety region 1322 of the leaked liquid. At this time, the safety extraction system 14 is used to ensure that the liquid level in the hot corner region 132 is below the safety warning liquid level 133, so as to prevent the low-temperature liquid leaked to the hot corner region 132 from contacting the pearlite sand located in the heat-insulated region 131, and prevent the heat insulation and cold preservation effect of the pearlite sand from being invalid.

The discharging pump column 15 sequentially passes through the inner tank 12 and the outer tank 11 from bottom to top and extends upwards out of the top of the outer tank 11. The discharging pump column is used to output liquid in the inner tank 12 outwards. Specifically, the discharging pump column 15 includes a discharging tube and a discharging pump which is installed through the discharging tube. The liquid inlet of the discharging tube is communicated with the bottom of the inner tank 12, and the discharging tube sequentially passes through the top of the inner tank 12 and the top of the outer tank 11 upwards in the vertical direction. Also, there is a gap which is arranged between the liquid inlet of the discharging tube and the bottom of the inner tank 12 in a vertical direction, so that liquid in the inner tank 12 can enter the discharging tube through the liquid inlet of the discharging tube. A discharge pipeline 151 is communicated with a liquid outlet of the discharging tube, the discharge pipeline 151 is communicated with the outside, and the material delivering to the outside can be realized through the discharge pipeline 151.

The discharging pump is installed through the inside of the discharging tube and communicated with the bottom of the inner tank 12, and the discharging pump is used to provide power to pump liquid in the inner tank 12 into the discharging tube and deliver the liquid outwards through the discharge tube.

A suspended deck 16 is arranged inside of the outer tank 11 and located above the inner tank 12. Specifically, the suspended deck 16 is connected with the ceiling wall in the outer tank 11.

The heat preservation and insulation system is used for thermal insulation of the cryogenic full containment tank. The heat preservation and insulation system includes a suspended deck heat-insulated layer, an interlayer space heat-insulated layer and a bottom heat-insulated layer. The interlayer space heat-insulated layer is the heat-insulated layer disposed in the heat-insulated region 131 and the heat-insulated layer disposed in the hot corner region 132, as described above. Each heat-insulated layer is composed of one or more materials of pearlite sand, elastic felt, thermal insulation cotton, foam glass brick and the like, and is used for thermal insulation of the inner tank 12.

The safety extraction system 14 in this embodiment is described in detail below.

The safety extraction system 14 includes an extraction device 141, a filtration device 142, a liquid level detector 146 and a controller 147.

The extraction device 141 is communicated with the hot corner region 132 at the bottom of the interlayer space 13, extends upwards from the bottom of the interlayer space 13 and passes through the top of the outer tank 11. The extraction device 141 is used to extract the liquid leaked from the inner tank 12 into the hot corner region 132 so as to control the liquid level in the interlayer space 13. Specifically, the extraction device 141 is communicated with the lower part of the hot corner region 132, that is, the extraction device 141 is communicated with the liquid collection region 1321.

The extraction flow rate of the extraction device 141 is greater than the maximum possible leakage flow rate of the inner tank 12 specified by the standard, and the liquid level of the low-temperature liquid leaked to the hot corner region 132 can be controlled within range of the safety region 1322 in the case that leakage accident occurs in the inner tank 12. For example, taking the cryogenic full containment tank described above with a liquid level of 30 m and an equivalent leakage aperture of Φ20 as an example, the leakage rate will reach about 27 m³/h, at this time, the extraction flow rate of the extraction device 141 should be greater than 27 m³/h.

In this embodiment, the extraction device 141 is a special small pump column. Specifically, the extraction flow rate of the small pump column 141 is less than the discharge flow rate of the discharging pump column 15 conventionally configured in the cryogenic full containment tank, and the inner diameter of the pump barrel is less than the inner diameter of the discharging tube.

The extraction device 141 includes a pump barrel and a cryogenic submersible pump.

The liquid inlet of the pump barrel is located in the hot corner region 132 and is communicated with the hot corner region 132. The pump barrel extends vertically upwards and passes through the top of the outer tank 11, so that the liquid outlet of the pump barrel is above the outer tank 11. Specifically, the liquid inlet of the pump barrel is located at the lower part of the hot corner region 132 and is communicated with the liquid collection region 1321, and spacing is arranged in the vertical direction between the liquid inlet of the pump barrel and the bottom wall of the outer tank 11, so that the liquid in the hot corner region 132 can enter the pump barrel through the liquid inlet.

The cryogenic submersible pump is installed through inside of the pump barrel and is communicated with the hot corner region 132. The cryogenic submersible pump is used to provide power to pump liquid in the hot corner region 132 into the pump barrel, and deliver it through the pump barrel.

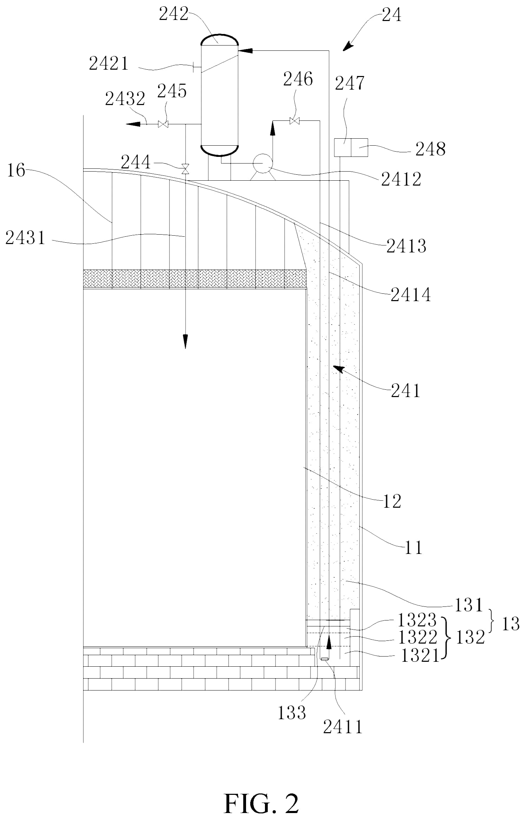

Fig. 2 is a schematic structural diagram of a cryogenic full containment tank in some embodiments.

Referring to Fig. 2, it should be noted that, in the embodiment shown in Fig. 2, the outer tank 11, the inner tank 12, the interlayer space 13, the heat-insulated region 131 and the heat corner region 132 thereof, the discharging pump column, the suspended deck 15 and other structures are the same as those of the embodiment shown in Fig. 1, and reference may be made to the above description, which is not repeated herein. In addition, the embodiment shown in Fig. 2 differs from the embodiment shown in Fig. 1 in terms of the safety extraction system 14, and the differences are explained below with reference to Fig. 2.

In some embodiments, the extraction device 241 includes an extractor 2411, a circulation pump 2412, a drainage pipeline 2413, and an output pipeline 2414.

An extractor 2411 is arranged in the hot corner region 132. The suction port of the extractor 2411 is communicated with the hot corner region 132, and the liquid outlet of the extractor 2411 is communicated with the liquid inlet of the filtration device 242. In this embodiment, the extractor 2411 is a venturi pump.

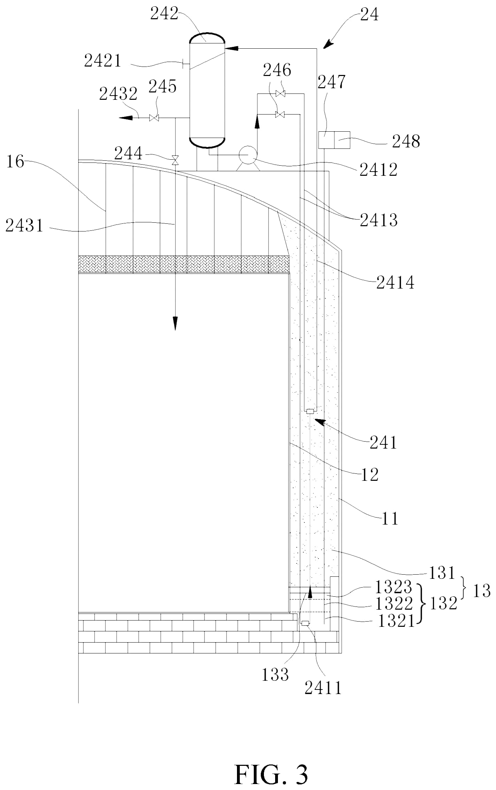

The number of the extractors 2411 may be plural, and a plurality of extractors 2411 are arranged in series, as shown in Fig. 3.

The circulation pump 2412 is arranged on the top of the outer tank 11. A liquid inlet of the circulation pump 2412 is communicated with the filtration device 242, a liquid outlet of the circulation pump 2412 is communicated with a liquid inlet of the extractor 2411, so as to pump liquid into the extractor 2411 to realize the extracting operation of the extractor 2411.

One end of the drainage pipeline 2413 is communicated with the liquid outlet of the circulation pump 2412, and the other end passes through the top of the outer tank 11 to enter the interlayer space 13, extends downwards to the lower part of the hot corner region 132 of the interlayer space 13, and is communicated with a liquid inlet of the extractor 2411, so that the liquid outlet of the circulation pump 2412 is communicated with the liquid inlet of the extractor 2411. Optionally, a third control valve 246 is disposed on the drainage pipeline 2413 for controlling the switching (on/off state) of the drainage pipeline.

One end of the output pipeline 2414 is communicated with the liquid outlet of the extractor 2411, and the other end extends upwards and passes through the top of the outer tank 11, and is communicated with the liquid inlet of the filtration device 242.

When the liquid in the interlayer space 13 is extracted, the liquid in the filtration device 242 enters the extractor 2411 through the circulation pump 2412 and the drainage pipeline 2413, so that the liquid in the hot corner region 132 of the interlayer space 13 can enter into the extractor 2411 through the suction hole under the action of a pressure difference, and after being mixed, the liquid enters into the filtration device 242 through the output pipeline 2414.

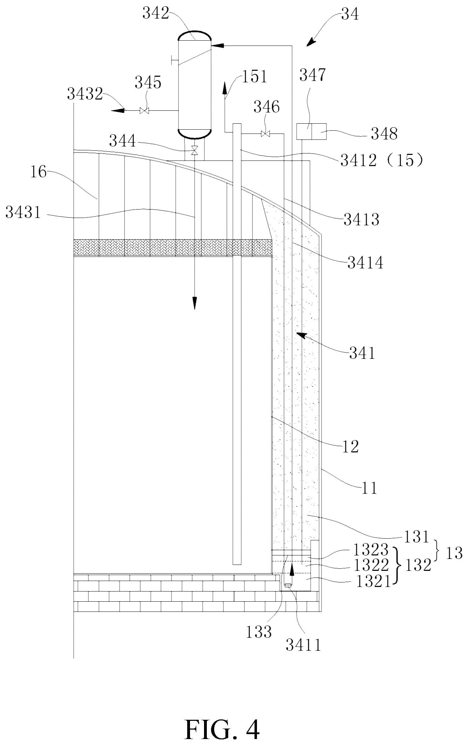

Fig. 4 is a schematic structural diagram of a cryogenic full containment tank in some other embodiments.

Referring to Fig. 4, it should be noted that, in the embodiment shown in Fig. 4, the outer tank 11, the inner tank 12, the interlayer space 13, the heat-insulated region 131 and the heat corner region 132 thereof, the discharging pump column, the suspended deck 15 and other structures are the same as those of the embodiment shown in Fig. 1, and reference may be made to the above description, which is not repeated herein. In addition, the embodiment shown in Fig. 4 differs from the embodiment shown in Fig. 1 in terms of the safety extraction system 14, and the differences are explained below with reference to Fig. 4.

Referring to Fig. 4, in some other embodiments, the extraction device 341 includes an extractor 3411, a power pump column 3412, a drainage pipeline 3413, and an output pipeline 3414.

The extractor 3411 is arranged at the bottom of the interlayer space 13. The suction port of the extractor 3411 is communicated with the interlayer space 13, and the liquid outlet of the extractor 3411 is communicated with the liquid inlet of the filtration device 342.

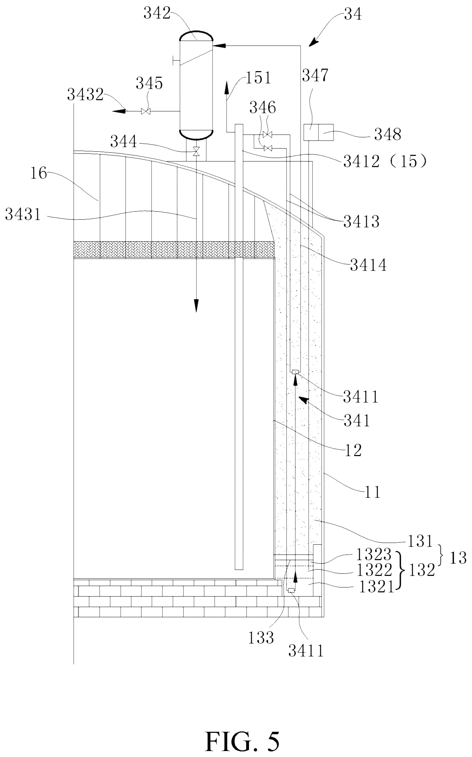

The number of the extractors 3411 may be plural, and a plurality of extractors 3411 are arranged in series, as shown in Fig. 5.

A liquid inlet of power pump column 3412 is communicated with the inner tank 12, and a liquid outlet of power pump column 3412 is communicated with the liquid inlet of the extractor 3411, so as to pump liquid into the extractor 3411 to realize the extracting operation of the extractor 3411. Specifically, the power pump column 3412 sequentially passes through the suspended deck 15 of the inner tank 12 and the outer tank 11 from bottom to top, and extends upward from the top of the outer tank 11, so that the liquid outlet of the power pump column 3412 is located above the outer tank 11.

Optionally, the power pump column 3412 includes a feed tube and a power pump installed through the feed tube. A liquid inlet of the feed tube is communicated with the bottom of the inner tank 12, and there is spacing between the liquid inlet of the feed tube and the tank bottom of the inner tank 12 in the vertical direction, so that the liquid in the inner tank 12 can enter the feed tube through the liquid inlet of the feed tube. The feed tube sequentially passes through the suspended deck 15 of the inner tank 12 and the top of the outer tank 11 upwards in the vertical direction, and the liquid outlet of the feed tube is communicated with the liquid inlet of the extractor 3411. The power pump is installed through the inside of the feed tube and is communicated with the inner tank 12, and the power pump is used to provide power to pump the liquid in the inner tank 12 into the feed tube and deliver the liquid into the extractor 3411 through the feed tube.

It should be noted that power pump column 3412 refers to the discharging pump column 15, that is, the discharging pump column 15 in this embodiment also serves as the power pump column 3412 of the extraction device 341. At this time, a liquid outlet of the discharging pump column 15 is communicated with the liquid inlet of the extractor 3411, and the extractor 3411 uses the discharging pump column 15 configured in the normal production operation of the cryogenic full containment tank as a power source to provide power to the extractor 3411, so as to extract the liquid leaked from the inner tank 12 into the bottom of the interlayer space 13.

In other embodiments, one power pump column 3412 independent of the discharging pump column 15 may be provided as the power source.

One end of the drainage pipeline 3413 is communicated with the liquid outlet of the power pump column 3412, the other end passes through the top of the outer tank 11 into the interlayer space 13, extends downwards to the lower part of the hot corner region 132 of the interlayer space 13, and is communicated with the liquid inlet of the extractor 3411, thereby achieving communication between the liquid outlet of the power pump column 3412 and the liquid inlet of the extractor 3411. Specifically, the drainage pipeline 3413 is communicated with a liquid outlet of the discharging pump column 15. At this time, the liquid outlet of the power pump column is located above the outer tank, which facilitates the connection between the drainage pipeline 3413 and the liquid outlet of the power pump column 3412, and facilitates maintenance at the connection therebetween. Optionally, a third control valve 346 for controlling the On/Off of the drainage pipeline 3413 is provided on the drainage pipeline 3413.

One end of the output pipeline 3414 is communicated with the liquid outlet of the extractor 3411, the other end extends upwards and through the top of outer tank 11 and is communicated with the liquid inlet of the filtration device 342.

During the liquid extraction in the interlayer space 13, the liquid in the inner tank 12 enters the extractor 3411 through the power pump column 3412 (discharging pump column 15) and the drainage pipeline 3413, so that the liquid in the hot corner region 132 of the interlayer space 11 can enter into the extractor 3411 through the suction hole under the action of the pressure difference, and after being mixed, the liquid enters the filtration device 342 through the output pipeline 3414.

With continued reference to Fig. 1, in this embodiment, the filtration device 142 includes a filter tank body and a filter element disposed inside the filter tank body.

The filter tank body is provided with a liquid inlet and a return port communicated with the inside of the filter tank body, the liquid inlet is communicated with a liquid outlet of the extraction device 141, and the return port is communicated with the inner tank 12. Specifically, the liquid inlet is located at the upper part of the filter tank body, and the liquid inlet is communicated with the pump barrel through a liquid inlet pipeline 1431. The return port is located at the bottom of the filter tank body and is communicated with the inner tank 12 through a return pipeline 1432.

Optionally, a first control valve 144 is provided on the return pipeline 1432 for controlling the On/Off of the return pipeline.

The filter tank body is also provided with an inlet port (liquid inlet port), the inlet port is located at the lower part of the filter tank body, and the inlet port is communicated with the outside through a delivering pipeline 1433. Optionally, a second control valve 145 is disposed on the delivering pipeline 1433 for controlling the On/Off of the delivering pipeline. In other embodiments, the return port may also be in communicated with the outside through the delivering pipeline 1433.

Referring to Fig. 2, in some embodiments, the return port is located at a lower part on the filter tank body. Optionally, the return port coincides with the inlet port. Specifically, the delivering pipeline 2432 is communicated with the inlet port, the return pipeline 2431 is communicated with delivering pipeline 2432, and the connection point between the return pipeline 2431 and the delivering pipeline 2432 is between the second control valve 245 and the filter tank body.

In some embodiments, the filter tank body is further provided with a communication port which is communicated with the interior thereof, and the communication port is communicated with the liquid inlet of the extraction device 241. Optionally, the communication port is the return port in the embodiment shown in Fig. 1, and the communication port is communicated with the circulation pump 2412 through a pipeline.

Referring to Fig. 4, in some other embodiments, the liquid inlet of the filter tank body is communicated with the outlet pipeline 3414.

Referring to Fig. 1, the filter element is arranged inside of the filter tank body, and divides the inside of the filter tank body into a space to be filtered and an accommodating space in an upper and down direction, and the liquid inlet and the return port are arranged on two opposite sides of the filter element, respectively. The liquid inlet is communicated with the space to be filtered, the return port and the inlet port are both communicated with the accommodating space. At this time, the liquid extracted by the extraction device 141 enters into the space to be filtered through the liquid inlet, impurities are blocked above the liquid through the filter element to filter the liquid in the space to be filtered, the filtered liquid flows downwards to the accommodating space and flows back to the inner tank 12 through the return port and the return pipeline 1432, or the filtered liquid may be delivered outwards through the inlet port and the delivering pipeline 1433.

Referring to Fig. 2, the communication port, the return port and the inlet port are located at the same side of the filter element, where the communication port is communicated with the accommodating space. At this time, the liquid extracted by the extraction device 241 enters the space to be filtered through the liquid inlet, and the impurities are blocked above the liquid through the filter element to filter the liquid in the space to be filtered, the filtered liquid flows downwards to the accommodating space and can be delivered to the circulation pump 2412 through the communication port and the pipeline, at this time, can flow back to the inside of the inner tank 12 through the return port and the return pipeline 2431, or the filtered liquid may be delivered outwards through the inlet port and the delivering pipeline 2432.

Referring to Fig. 1, optionally, a cleaning port 1421 is further disposed on the filter tank body and is communicated with the inside of the filter tank body. Specifically, the cleaning port 1421 is located at the upper part of the filter tank body, and is located above the filter element, it may clear the impurity on the filter element through cleaning port 1421 to ensure to the filtration effect of the filter element.

In other embodiments, the filtration device 142 may also be a component in another form, for example, a pipe filter, etc., which is not limited herein, and the specific arrangement thereof may be as desired.

The liquid level detector 146 is used to detect a liquid level signal of the interlayer space 13 and outputting the liquid level signal. Optionally, the liquid level detector 146 may detect liquid level at the bottom of the interlayer space 13 in a contact or non-contact manner. Specifically, the liquid level detector 146 is used to detect the liquid level at the lower part of the hot corner region 132.

The controller 147 is electrically connected with the extraction device 141 and the liquid level detector 146. The controller 147 receives the liquid level signal and controls the switching (on/off state) of the extraction device 141 according to the liquid level signal. Also, the controller 147 is electrically connected with the first control valve 144 and the second control valve 145 to control the switching (on/off state) and the opening degree of the first control valve 144 and the second control valve 145. Specifically, the controller 147 is electrically connected with the cryogenic submersible pump.

The controller 147 has the liquid level monitoring and alarm functions, and sends an alarm signal when the monitored liquid level is higher than a set alarm liquid level.

The controller 147A is provided with a first level preset value, a second level preset value and a third level preset value sequentially from low to high, where the first level preset value indicates that a liquid level is present in the hot corner region 132 and a liquid accumulation is formed, the second level preset value is a liquid level for switching off the extraction device 141, the third level preset value is a liquid level for switching on the extraction device 141. At this time, the interval in the vertical direction between the liquid inlet of the pump barrel and the bottom wall of the outer tank 1 1 is less than the liquid level indicated by the second level preset value.

In the embodiment shown in Fig. 2, the controller 248 is electrically connected with the circulation pump 2412. And switching on the circulation pump at a third level preset value, where the interval in the vertical direction between the suction port of the extractor 2411 and the bottom wall of the outer tank 11 is less than the liquid level represented by the second level preset value.

In the embodiment shown in Fig. 4, the controller 348 is electrically connected with power pump column 3412 (discharging pump column 15). The controller is also electrically connected with the third control valve 346 to control the switching and the opening degree of the third control valve 346. At the third preset level, the third control valve 346 is switched on, and the interval in the vertical direction between the suction port of the extractor 3411 and the bottom wall of the outer tank 11 is less than the liquid level represented by the second preset level.

Referring to Fig. 1, the controller 147 is electrically connected with the liquid level detector 146, receives the liquid level signal, and when the liquid level reaches the first level preset value, the controller 147 sends an alarm signal to remind the operator. It should be noted that other techniques may be used to detect a fault and alarm in the early stages of a leak where the hot corner region 132 has not yet developed a liquid level, where the controller 147 signals an alarm when the liquid level in the hot corner region 132 reaches the first level preset value in response to a possible activation of the safety extraction system 14, rather than detecting leakage in the inner tank 12.

The working principle of the above safety extraction systems 14, 24, 34 is as follows:

In the embodiment shown in Fig. 1, the liquid level detector 146 may detect the liquid level signal of the hot corner region 132 of the interlayer space 13 in real time in a contact or non-contact manner, and display and upload it to the controller 147 on site. When the liquid level signal detected by the liquid level detector 146 is greater than or equal to the first level preset value, it indicates that leakage occurs in inner tank 12 and that liquid accumulation has been formed in hot corner region 132. At this time, the controller 147 receives the liquid level signal and sends an alarm signal.

When the controller 147 receives the liquid level signal from the liquid level detector 146 and the liquid level reaches the third preset liquid level value for switching on the extraction device 141, the controller 147 sends a control signal to control the cryogenic submersible pump of the extraction device 141 to switch on. Meanwhile, the controller controls the first control valve 144 to switch on, so that the cryogenic submersible pump cooperates with the pump barrel to extract the liquid in the hot corner region 132, and the liquid is delivered into the filtration device 142 through the liquid inlet pipeline 1431 for filtering, and the filtered liquid flows back to the inner tank 12 through the return pipeline 1432. When the liquid level signal detected by the liquid level detector 146 falls to the second level preset value that switches off the extraction device 141, the controller 147 sends a control signal to switch off the cryogenic submersible pump of the extraction device 141.

Alternatively, the controller 147 controls the cryogenic submersible pump, the first control valve 144 and the second control valve 145 to switch on, so that the cryogenic submersible pump cooperates with the pump barrel to extract the liquid in the hot corner region 132, and the extracted liquid is delivered into the filtration device 142 through the liquid inlet pipeline 1431 for filtering, and the filtered liquid flows back to the inner tank 12 through the return pipeline 1432. Meanwhile, the filtered liquid is delivered outwards through the delivering pipeline 1433. When the liquid level signal detected by the liquid level detector 146 falls to the second level preset value that switches off the extraction device 141, the controller 147 sends a control signal to switch off the cryogenic submersible pump of the extraction device 141.

Alternatively, the controller 147 controls the cryogenic submersible pump and the second control valve 145 to switch on, so that the cryogenic submersible pump cooperates with the pump barrel to extract the liquid in the hot corner region 132, and the liquid is delivered into the filtration device 142 through the liquid inlet pipeline 1431 for filtering, and the filtered liquid is delivered outwards through the delivering pipeline 1433. When the liquid level signal detected by the liquid level detector 146 falls to the second level preset value that switches off the extraction device 141, the controller 147 sends a control signal to switch off the cryogenic submersible pump of the extraction device 141.

In the embodiment shown in FIG. 2, the liquid level detector 247 detects a liquid level signal of the hot corner region 132 of the interlayer space 13 in real time and transmits it to the controller 248. When the liquid level signal detected by the detection probe of the liquid level detector 247 is greater than or equal to the first level preset value, it indicates that leakage occurs in inner tank 12 and liquid accumulation has been formed in the hot corner region 132. At this time, the controller 248 receives the liquid level signal and sends an alarm signal.

When the controller 248 receives the liquid level signal from the liquid level detector 247 and the liquid level reaches the third level preset value for switching on the extraction device 241, the controller 248 sends a control signal to control the circulation pump 2412 and the first control valve 244 of the extraction device 241 to switch on, so that the circulation pump 2412 pumps the liquid in the accommodating space of the filter tank body of the filtration device 242 and delivers the liquid to the extractor 2411 through the drainage pipeline 2413, so that the liquid in the hot corner region 132 of the interlayer space 13 can enter the extractor 2411 through the suction hole under the action of pressure difference, the mixed liquid enters the filtration device 242 through the output pipeline 2414 and the liquid inlet to be filtered, and the filtered liquid flows back to the inner tank 12 through the return pipeline 2431. When the liquid level signal detected by the liquid level detector 247 falls to the second level preset value that switches off the extraction device 141, the controller 248 sends a control signal to switch off the circulation pump 2412 of the extraction device 241.

Alternatively, the controller 248 controls the circulation pump 2412, the first control valve 244 and the second control valve 245 to switch on, so that the circulation pump 2412 cooperates with the drainage pipeline 2413 to guide the liquid in the filter tank body into the extractor 2411, so that the liquid in the hot corner region 132 of the interlayer space 13 can enter into the extractor 2411 through the suction hole under the action of pressure difference, after being mixed, the mixed liquid enters the filtration device 242 through the output pipeline 2414 to be filtered, and the filtered liquid flows back to the inner tank 12 through the return pipeline 2431 and is delivered outwards through the delivering pipeline 2432. When the liquid level signal detected by the liquid level detector 247 falls to the second level preset value that switches off the extraction device 141, the controller 248 sends a control signal to switch off the circulation pump 2412 of the extraction device 241.

Alternatively, the controller 248 controls the circulation pump 2412 and the second control valve 245 to switch on, so that the circulation pump 2412 cooperates with the drainage pipeline 2413 to guide the liquid in the filter tank body into the extractor 2411, so that the liquid in the hot corner region 132 of the interlayer space 13 can enter the extractor 2411 through the suction hole under the action of pressure difference, and after being mixed, the mixed liquid enters the filtration device 242 through the output pipeline 2414 to be filtered, and the filtered liquid is delivered outwards through the delivering pipeline 2432. When the liquid level signal detected by the liquid level detector 247 falls to the second level preset value that switches off the extraction device 241, the controller 248 sends a control signal to switch off the circulation pump 2412 of the extraction device 241.

In the embodiment shown in Fig. 4, the liquid level detector 347 may detect the liquid level of the hot corner region 132 of the interlayer space 13 in real time in a contact or non-contact manner and upload the signal to the controller 348. When the liquid level detected by the liquid level detector 347 is greater than or equal to the first level preset value, it indicates that leakage occurs in inner tank 12 and that liquid has been collected in hot corner region 132. At this time, the controller 348 sends an alarm signal. When the power pump column 3412 is used to extract, the power pump column 3412 may be switched on firstly, so that material may be delivered outwards, and when the liquid level in the hot corner region rises to the third level preset value, the control valve 346 is switched on to allow part of the materials to enter the extractor for extracting.

When the liquid level signal received by the controller 348 from the liquid level detector 347 reaches the third level preset value to switch on the extraction device 341, the power pump column 3412 is in operation and the liquid in the inner tank 12 is delivered outwards. At this time, the controller 348 sends control signal to control the first control valve 344 and the third control valve 346 to switch on. Alternatively, when the power pump column 3412 is in the off state, the controller 348 controls the power pump column 3412 to switch on in addition to the first control valve 344 and the third control valve 346, so that the power pump column 3412 (discharging pump column 15) draws the liquid in the inner tank 32 and delivers it to the extractor 3411 through the drainage pipeline 3413, so that the liquid in the hot corner region 132 of the interlayer space 13 can enter into the extractor 3411 through the suction hole under the action of the pressure difference. After being mixed, the liquid enters the filtration device 342 through the output pipeline 3414 and the liquid inlet for filtering. The filtered liquid flows back to the inner tank 32 through the return pipeline 3431. When the liquid level signal detected by the liquid level detector 347 falls to the second level preset value that switches off the extraction device 341, the controller 348 sends a control signal to switch off the power pump column 3412 (discharging pump column 15) and/or the third control valve 346. That is, if it is necessary to deliver the material outwards through the power pump column 3412, only the third control valve 346 is switched off.

Alternatively, the controller 348 controls the discharging pump column 15, the first control valve 344 and the third control valve 346 to switch on, so that the power pump column 3412 (discharging pump column 15) cooperates with the drainage pipeline 3413 to guide the liquid in the inner tank 32 into the extractor 3411, so that the liquid in the hot corner region 132 of the interlayer space 13 can enter into the extractor 3411 through the suction hole under the action of pressure difference, after being mixed, the liquid enters the filtration device 342 through the output pipeline 3414 to be filtered, and the filtered liquid flows back to the inner tank 32 through the return pipeline 3431 and is delivered outwards through the delivering pipeline 3432. When the liquid level signal detected by the liquid level detector 347 falls to the second level preset value that switches off the extraction device 341, the controller 348 sends a control signal to switch off the power pump column 3412 (discharging pump column 15) and/or the third control valve 346.

Alternatively, the controller 348 controls the power pump column 3412 (discharging pump column 15) and third control valve 346 to switch on, so that power pump column 3412 (discharging pump column 15) and the drainage pipeline 3413 cooperate to guide liquid in inner tank 32 into extractor 3411, so that liquid in the hot corner region 132 of the interlayer space 13 can enter unto the extractor 3411 through the suction hole under the action of pressure difference, and after being mixed, the liquid enters into the filtration device 342 through the output pipeline 3414 for filtering. The filtered liquid is directly delivered outwards through delivering pipeline 3432. When the liquid level signal detected by the liquid level detector 347 falls to the second level preset value that switches off the extraction device 341, the controller 348 sends a control signal to switch off the power pump column 3412 (discharging pump column 15) and/or the third control valve 346.

In summary, in the present application, by providing the safety extraction system, when leakage occurs in the inner tank, the extraction device 341 can extract the liquid leaked from the inner tank into the bottom of the interlayer space to control the liquid level in the hot corner region at the lower part of the interlayer space; also, the extracted liquid is filtered by the filtration device and then is delivered back to the inside of the inner tank or output outwards so as to ensure that the liquid delivered back to the inner tank or the liquid output outwards has no impurities. As such, the cryogenic full containment tank with the leaked inner tank can be maintained to run for a long time without other empty tanks for material dumping, thereby winning time for transferring materials and safe shutdown. In other words, the present application enables the cryogenic full containment tank to maintain a controllable, safe operation for a long time after leakage occurs in the inner tank without the need for emergency response, simply by activating the safety extraction system until the materials have been removed.

It may be understood that equivalent substitutions or alterations may be made for those skilled in the art in accordance with the technical solution of the present application and its inventive concept, and all such alterations or substitutions shall belong to the scope of protection of the appended claims of the present application.

## Claims

1. A cryogenic full containment tank, comprising an outer tank, an inner tank which is arranged inside of the outer tank and a suspended deck, a discharging pump column for outputting liquid in the inner tank outwards, a heat preservation and insulation system for preserving and insulating heat of the cryogenic full containment tank, and a safety extraction system; an interlayer space is enclosed between an inner peripheral side wall of the outer tank and an outer peripheral side wall of the inner tank;
the safety extraction system comprises:
an extraction device which is communicated with a hot corner region at the bottom of the interlayer space, extends upwards from the bottom of the interlayer space and passes through the top of the outer tank, and the extraction device is used to extract liquid leaked from the inner tank into the hot corner region; and the extraction flow rate of the extraction device is greater than the maximum flow rate corresponding to the leakage condition required by leakage protection standards; and
a filtration device which is arranged at the top of the outer tank; the filtration device is communicated between the extraction device and the inner tank, and is used to filter the liquid extracted by the extraction device and delivers the filtered liquid back to the inside of the inner tank or output it outwards.

2. The cryogenic full containment tank according to claim 1, wherein the extraction device comprises a pump barrel and a cryogenic submersible pump, a liquid inlet of the pump barrel is located in the hot corner region and is communicated with the hot corner region, and the pump barrel extends upwards in a vertical direction and passes through the top of the outer tank;
the cryogenic submersible pump is installed through the inside of the pump barrel and is communicated with the hot corner region, and the cryogenic submersible pump is used to provide power to draw out liquid in the hot corner region.

3. The cryogenic full containment tank according to claim 1, wherein the extraction device comprises an extractor and a circulation pump, the extractor is arranged in the hot corner region, a suction port of the extractor is communicated with the hot corner region, and a liquid outlet of the extractor is communicated with a liquid inlet of the filtration device;
the circulation pump is arranged at the top of the outer tank, a liquid inlet of the circulation pump is communicated with the filtration device, a liquid outlet of the circulation pump is communicated with a liquid inlet of the extractor, and the circulation pump is used to pump liquid into the extractor to realize the extracting operation of the extractor.

4. The cryogenic full containment tank according to claim 1, wherein the extraction device comprises an extractor and a power pump column;
the extractor is arranged in the hot corner region at the bottom of the interlayer space, the suction port of the extractor is communicated with the hot corner region, and the liquid outlet of the extractor is communicated with the liquid inlet of the filtration device;
a liquid inlet of the power pump column is communicated with the inner tank, and a liquid outlet of the power pump column is communicated with the liquid inlet of the extractor and is used to pump liquid into the extractor to realize the extracting operation of the extractor.

5. The cryogenic full containment tank according to claim 4, wherein the power pump column sequentially passes through the inner tank and the outer tank from bottom to top, and the liquid outlet of the power pump column is located above the outer tank.

6. The cryogenic full containment tank according to claim 3 or 4, wherein the extraction device comprises a plurality of extractors; and
the plurality of the extractors are arranged in series.

7. The cryogenic full containment tank according to claim 1, wherein the filtration device comprises a filter tank body and a filter element arranged inside of the filter tank body, wherein the filter tank body is provided with a liquid inlet and a return port which are communicated with the inside of the filter tank body, and the liquid inlet and the return port are arranged at two opposite sides of the filter element, respectively; the liquid inlet is communicated with the liquid outlet of the extraction device, the return port is communicated with the inner tank, and the return port is communicated with the outside.

8. The cryogenic full containment tank according to claim 7, wherein the filter tank body is also provided with an inlet port which is communicated with the outside through a delivering pipeline.

9. The cryogenic full containment tank according to claim 1, wherein the filtration device comprises a filter tank body and a filter element arranged inside of the filter tank body, wherein the filter tank body is provided with a liquid inlet and a communication port which are communicated with the inside of the filter tank body, and the liquid inlet and the communication port are arranged at two opposite sides of the filter element, respectively; the liquid inlet is communicated with the liquid outlet of the extraction device, and the communication port is communicated with the liquid inlet of the extraction device.

10. The cryogenic full containment tank according to claim 9, wherein the filter tank body is also provided with a return port and an inlet port, and the return port, the inlet port and the communication port are located on the same side of the filter element; the return port is communicated with the inner tank through a return pipeline, and the inlet port is communicated with the outside through a delivering pipeline.

11. The cryogenic full containment tank according to anyone of the claims 7 to 10, wherein the filter tank body is also provided with a cleaning port communicated with the inside of the filter tank body, and the cleaning port is correspondingly arranged above the filter element.

12. The cryogenic full containment tank according to claim 1, wherein the safety extraction system also comprises a liquid level detector and a controller, wherein the liquid level detector is used to detect a liquid level signal inside of the hot corner region and output the liquid level signal;
the controller is electrically connected with the extraction device and the liquid level detector, receives the liquid level signal and controls the switching of the extraction device according to the liquid level signal;
the controller has liquid level monitoring and alarm functions, and sends an alarm signal when a monitored liquid level is higher than a set warning liquid level.

13. The cryogenic full containment tank according to claim 1, wherein the interlayer space is divided into a heat-insulated region and a hot corner region in an upper and down direction;
the hot corner region is divided into a lower part, a middle part and an upper part from bottom to top, the lower part is a liquid collection region, the middle part is a liquid level fluctuation safety region for extracting operation, and the upper part is an isolation region; and
the extraction device is communicated with the liquid collection region.

14. The cryogenic full containment tank according to claim 13, wherein heat-insulated layers are arranged in both the heat-insulated region and the hot corner region; and the heat-insulated layer in the hot corner region is arranged in close contact with an inner wall of the outer tank.
